# EUROPEAN PATENT SPECIFICATION

(11) **EP 1 341 336 B1**
(45) Date of publication and mention of the grant of the patent: **13.07.2005**
(21) Application number: 02003439.3
(22) Date of filing: 14.02.2002
(51) Int. Cl.: H04L 1/18, H04L 1/00, H04L 1/16, H04L 12/56, H04Q 7/32, H04Q 7/22

(54) **Method for controlling the data rate of transmitting data packets in a wireless communications system, receiver and transmitter therefor**
Verfahren zum Steuern der Datenrate in einem drahtlosen Paketdatenkommunikationssystem, Sender und Empfänger zu seiner Verwendung
Procédé de commande du débit binaire dans un système de communication sans fil à paquets de données, récepteur et emetteur correspondantes

(43) Date of publication of application: 03.09.2003
(73) Proprietor: Matsushita Electric Industrial Co., Ltd., Osaka 571-8501 (JP)
(72) Inventor: Petrovic, Dragan, Monzastrasse 4c, 63225 Langen (DE); Seidel, Eiko, 64285 Darmstadt (DE); Hidetoshi, Suzuki, Matsushita Electric Ind.Co.,Ltd, Chuo-ku, Osaka, 540-6319 (JP)
(74) Representative: Grünecker, Kinkeldey, Stockmair & Schwanhäusser Anwaltssozietät

(56) References cited:
- WO-A-00/42792
- US-A- 5 920 545
- ZIEGLER T ET AL: "Congestion avoidance with BUC (buffer utilization control) gateways and RFCN (reverse feedback congestion notification)" PERFORMANCE, COMPUTING, AND COMMUNICATIONS CONFERENCE, 1997. IPCCC 1997., IEEE INTERNATIONAL PHOENIX, TEMPE, AZ, USA 5-7 FEB. 1997, NEW YORK, NY, USA,IEEE, US, 5 February 1997 (1997-02-05), pages 410-418, XP010217018 ISBN: 0-7803-3873-1

## Description

The invention relates to a method for controlling the data rate of transmitting data packets in a wireless communications system according to the preamble part of claim 1.Further, the invention relates to a correspondingly adapted receiver and transmitter.

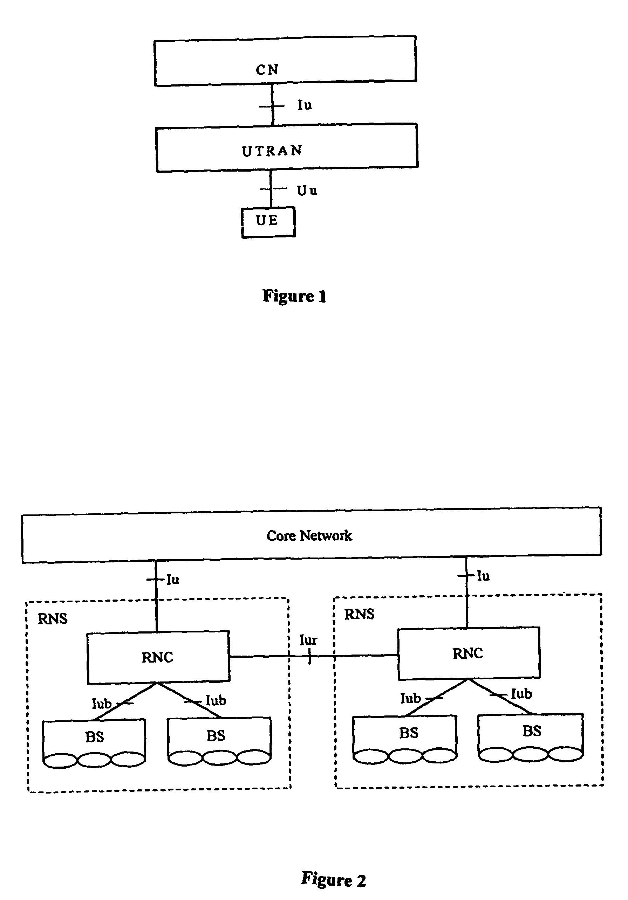

The high level architecture of the Universal Mobile Telecommunication System (UMTS) is shown in Figure 1. The network elements are functionally grouped into Core Network (CN), UMTS Terrestrial Radio Access Network (UTRAN) and User Equipment (UE). UTRAN is responsible for handling all radio-related functionality, while CN is responsible for routing calls and data connections to external networks. The interconnections of these network elements are defined by open interfaces as can be seen in the Figure. It should be noted that UMTS system is modular and it is therefore possible to have several network elements of the same type.

Figure 2 illustrates the current architecture of UTRAN. A number of RNCs (Radio Network Controllers) are connected to the CN. Each RNC controls via wired links (lub interface) one or several base stations (BS) which in turn communicate via radio links (not shown) with the UEs.

The most common technique for error correction of non-real time services is based on Automatic Repeat reQuest (ARQ) schemes which are combined with Forward Error Correction (FEC), called hybrid ARQ (HARQ). If an error is detected by Cyclic Redundancy Check (CRC), the receiver requests the transmitter to send additional bits. The ARQ scheme Type II/III assumes that erroneously received packets are stored and a retransmission is requested by an NACK (not-acknowledgement) signal. The additional bits are then combined with previously received bits of the same packet. Correctly received packets are acknowledged by ACK (acknowledgement) signal. From different existing protocols the stop-and-wait (SAW) and selective-repeat (SR) ARQ are most often used in mobile communication.

High Speed Downlink Packet Access (HSDPA) is a new technology for UMTS standardised by 3GPP. It shall provide higher data rates in the downlink by introducing enhancements at the Uu interface such as adaptive modulation and coding.

HSDPA relies on HARQ protocol Type II/III, rapid selection of users which are active on the shared channel and adaptation of transmission format parameters according to the time varying channel conditions.

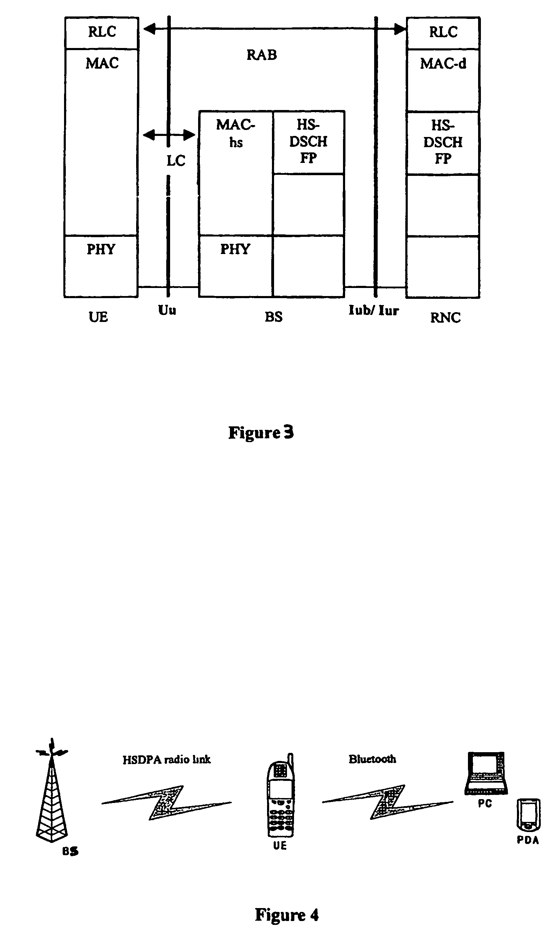

The user plane radio interface protocol architecture of HSDPA is shown in the Figure 3. The HARQ protocol and scheduling function belong to the Medium Access Control High Speed (MAC-hs) sublayer which is distributed across the BS and UE. It should be noted that an SR ARQ protocol based on sliding window mechanisms could be also established between RNC and UE on the level of Radio Link Control (RLC) sublayer. Parameters of the protocols are configured by signaling. The service that is offered from the RLC sublayer for point-to-point connection between CN and UE is referred to as Radio Access Bearer (RAB) . Each RAB is subsequently mapped to a service offered from MAC layer.

The BS comprises in the (MAC-hs) sublayer a scheduler which controls both the allocation of radio resources to data flows in form of logical channels (LC) belonging to different users or to a same user and the current transmission format in one Time Transmission Interval (TTI). One TTI consists of three slots. In particular, the scheduler selects a logical channel to be served each TTI. It is assumed that different logical channels have different priorities. As the scheduler is located in the BS, retransmissions can be rapidly requested thus allowing small delays and high data rates.

A UE can connect to other communication devices as illustrated in figure 4. As shown therein, data is transmitted from the BS to the UE over an HSDPA radio link. Bluetooth, a short distance radio technology, is used for inter-connecting the UE to a PC, digital camera or Personal Digital Assistant (PDA). Connecting to data services through one's cellular phone is also known as the concept of a personal gateway. Problems arise from different average, peak and instantaneous bit rates that are available over these different radio connections.

For example, HSDPA aims at supporting peak bit rates of the order of 1.2 Mbps up to 10Mbps, while the average bit rate of Bluetooth is limited within 728 kbps. The RNC has to ensure that the average bit rate does not exceed what the UE can process. Otherwise, it can happen that a buffer in the UE at application level is overflown because all data that are received by the UE cannot be delivered immediately to the PC or PDA.

To limit the average bit rate over the HSDPA radio link, the parameters of certain protocols (e.g. window size in RLC layer, number of HARQ processes in MAC layer, minimum inter TTI interval for transmission, priority etc.) can be configured accordingly. During connection set-up quality-of-service (QoS) negotiations are conducted on the application layer. During RAB setup, the core network signals the agreed QoS attributes to the RNC (UTRAN) over the lu interface. The RNC has to take care that the maximum data rate is not exceeded. This control operation is carried out by slow RNC signaling.

One UE can have several active connections (data flows) over the HSDPA radio link (e.g. file transfer with FTP in parallel to audio or video streaming with Real Time Application Protocol (RTP) or web browsing with HTTP. A separate logical channel in the BS is assigned to each of them to prioritize the various data flows of one user and between different users.

As pointed out in the above, the instantaneous data rate over a Bluetooth connection can change for instance due to interference from other systems (e.g. WLAN 802.11b). To leverage this problem it is not sufficient to configure the protocols by RNC signaling, since this procedure is very slow and cannot accommodate rapid fluctuations imposed by varying interference. For example, if the data rate of Bluetooth is suddenly reduced, the UE buffer fills up since the data can not be send to the PC or PDA. This will cause the UE to drop packets that have been transmitted over the air interface. Since the air interface is the most scarce resource such a behavior should be avoided under all circumstances.

A method comprising the steps according to the preamble portion of claim 1 is known from WO 00 42 792 A.

The present invention aims to provide a method of controlling the rate of transmitting data packets in a wireless communications system, a transmitter and a receiver therefor, which enable efficient usage of the radio resources.

This object is solved by a method as specified in claim 1. Further, the receiver and transmitter are defined respectively by claims 22 and 23.

According to the method of the invention, the data rate is controlled based on the receiver's current capability to process the amount of received data packets. By signaling a request to control the data rate in the uplink feedback channel between the receiver and the transmitter, the method allows for a dynamic adjustment of the data rate of at least one logical channel. As a result, the control operation is fast and the data rate can be instantaneously adapted to the current state of the receiver's process capability. Hence, a data overflow on the application layer of the receiver can be avoided and the transmitter is prevented from wastefully transmitting packets which can not be properly processed in the receiver.

According to a preferred embodiment, the capability to process the amount of data packets depends on the buffer occupancy state of an application at the receiver. In this embodiment, the method of the invention advantageously contributes to an intelligent management of the application buffer. Without the fast data rate control at the MAC-hs sublayer, correctly received data packets would be acknowledged and forwarded to a possibly already filled application buffer.

According to another embodiment, the capability to process the amount of data packets depends on the receiver's capability to transmit the received data packets to another communication device. Hence, the transmitter can be ordered to stop transmission or to reduce the data rate currently transmitted.

Preferably, the downlink communication channel is suitable for HSDPA and the receiver's transmission to another communication device is based on a short distance radio technology such as Bluetooth in order to transmit high data rates with standardized protocols.

According to a prefered embodiment, the communication system employs an automatic repeat request (ARQ) or a hybrid automatic repeat request (HARQ) protocol to increase the number of correctly received data packets.

Advantageously, the signaling information in the uplink feedback channel includes an implicit or explicit identification of the logical channel for which the data rate is to be controlled. As a result, individual logical channels can be identified, for which the data control shall be applied, while for others, the data rate can be maintained.

According to a prefered embodiment, the identification of the logical channel is enabled by sending the signaling information with a uniquely specified timing being related to the timing of a regular measurement feedback cycle. This reduces the overhead required for sending additional signalling information.

A further reduction in overhead is obtained, if the signaling information in the uplink feedback channel is combined with other signaling information of the communication system, for example, as a unique bit combination in a recommended Transmission Format Resource Combination (TFRC).

Alternatively, signaling information can be sent as a virtual channel condition information having a value which indicates a worse channel condition than the current channel condition.

Preferably, the signaling information requests allocation of fewer radio resources for the logical channel in the next transmission of data packets.

In a variant, signaling information is sent as part of an acknowledgement (ACK)/not acknowledgement (NACK) message for the received data packets.

Advantageously, the data rate control is performed for a predetermined period of time, which is signaled from the radio network controller of the communication system.

Furthermore, it is preferred that upon performing data rate control in response to receipt of a request to reduce the data rate or stop the transmission, data transmission is resumed with an incrementally increased data rate. As a result, this slow start data transmission avoids the waste of large amounts of data for a receiver which has not yet recovered in his ability of processing data.

Advantageously, in response to receipt of a request to reduce the data rate or stop data transmission, it is resumed with a small amount of data as a probe to first obtain the receiver's signaling information in the uplink feedback channel before sending large amounts of data packets which would be lost in case the receiver has not yet regained his processing capability.

The present invention will become more apparent to a person skilled in the art by the following detailed description with reference to the accompanying drawings which show:
- Figure 1:: A high level UMTS architecture diagram;
- Figure 2:: A more detailed diagram illustrating the architecture of UTRAN;
- Figure 3:: A user plain radio interface architecture diagram of HSDPA to which the present invention is applicable;
- Figure 4:: A communication system to which the present invention is applicable;
- Figure 5:: A schematic diagram illustrating the coding operation for uplink signaling;
- Figure 6:: A feedback measurement transmission timing diagram.

Wireless communications systems typically comprise a network of base stations, each of which communicate with a plurality of mobile terminals also referred to as user equipment (UE) herein. As it is clear to the skilled person, the base station as well as the UE is a transceiver device having a receiving and transmitting radio portion. For simplicity and the purpose of illustrating this invention, only the transmitting portion of the base station and the receiving portion of the UE will be considered. Similarly, only the feedback channel from the UE to the base station is considered. Hence, in the following the base station will be designated as the transmitter, whereas the receiver is constituted by the UE. However, it is clear to those skilled in the art that the present invention is also applicable to a system wherein the UE constitutes the transmitter and the base station as the receiver provides the uplink feedback channel.

The structure of the uplink feedback channel is currently under investigation in 3GPP standardization. Related uplink signalling consists of HARQ acknowledgement and channel quality indicators. Uplink signalling is transmitted on a dedicated uplink channel for each user.

A 1-bit indication is used for an HARQ acknowledgement. The acknowledgement bit is repetition coded to 10 bits and transmitted in one slot. Furthermore the UE should signal the downlink channel quality (e.g Carrier to Interference (C/I) Ratio) to the BS to assist the scheduler. Instead of the channel quality the UE could also signal a recommended Transmission Format Resource Combination (TFRC). The primary benefit of requesting a TFRC compared to signaling the channel state is the ability to deal with different UE implementations resulting in different performance for a certain transport format at a specific channel state. In the following explanations are only given for TFRC request signaling although the invention is applicable to explicit channel quality reporting such as C/I or SNR as well. The calculation of the channel quality indicator or TFRI can be based on several parameters and is out of the scope of this invention.

In Table 1 a simple example of a different Transport Format Resource Indications can be seen. Six different TFRC are specified in this case. A low TFRC value corresponds to bad channel conditions (lower level modulation, low code rate) and a high TFRC value maximizes throughput for good channel conditions. In addition to these combinations there maybe more entries for signaling a power offset for certain combinations given a better adaptation to the channel conditions.

**Table 1**

| TFRCs | Modulation | Transport block set size | # of code channels | HSDSCH code power level |
|---|---|---|---|---|
| TFRC1 | QPSK | 1200 | 5 | Pₕₛ |
| TFRC2 | QPSK | 2400 | 5 | Pₕₛ |
| TFRC3 | QPSK | 3600 | 5 | Pₕₛ |
| TFRC4 | 16QAM | 4800 | 5 | Pₕₛ |
| TFRC5 | 16QAM | 6000 | 5 | Pₕₛ |
| TFRC6 | 16QAM | 7200 | 5 | Pₕₛ |

In Table 2 an example is given for a 5 bit TFRC request list signalled from the UE to the BS to indicate current channel condition and to request certain transmission format.

**Table 2**

| TFRC | Power offset | UL signaling value |
|---|---|---|
| TFRC1 | 12 dB | 0 |
| | 11 dB | 1 |
| | 10 dB | 2 |
| | 9 dB | 3 |
| | 8 dB | 4 |
| | 7 dB | 5 |
| | 6 dB | 6 |
| | 5 dB | 7 |
| | 4 dB | 8 |
| | 3 dB | 9 |
| | 2 dB | 10 |
| | 1 dB | 11 |
| | 0 dB | 12 |
| TFRC2 | 2 dB | 13 |
| | 1 dB | 14 |
| | 0 dB | 15 |
| TFRC3 | 2 dB | 16 |
| | 1 dB | 17 |
| | 0 dB | 18 |
| TFRC4 | 2 dB | 19 |
| | 1 dB | 20 |
| | 0 dB | 21 |
| TFRC5 | 2 dB | 22 |
| | 1 dB | 23 |
| | 0 dB | 24 |
| TFRC6 | 2 dB | 25 |
| | 1 dB | 26 |
| | 0 dB | 27 |
| NA | NA | 28 |
| NA | NA | 29 |
| NA | NA | 30 |
| NA | NA | 31 |

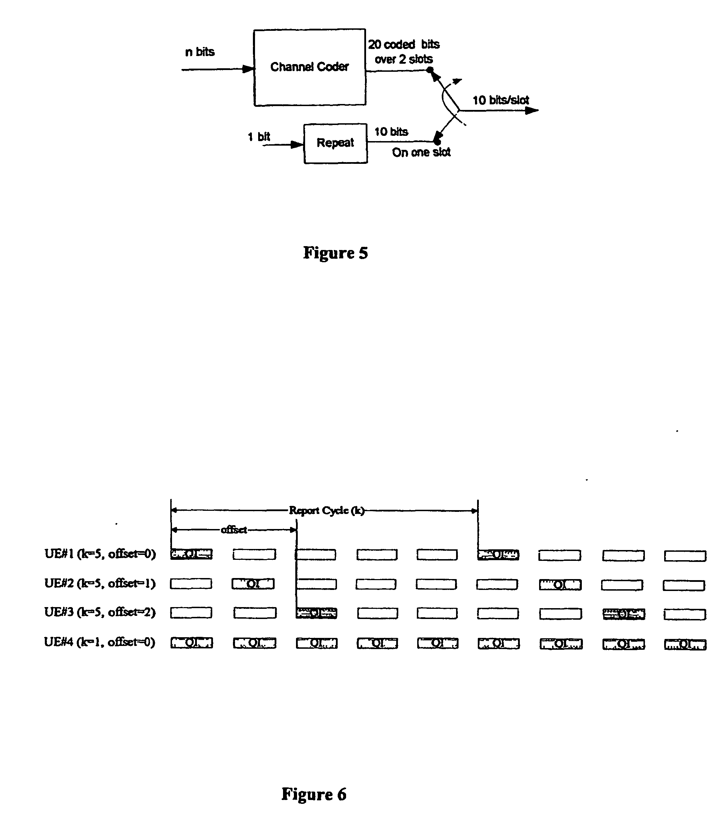

The BS does not necessarily have to follow the request of the UE. In both tables the resource indication for the number of codes is kept constant to limit the number of combinations. A UE uses certain criteria to determine which transmission format it is able to receive in given channel conditions. A 5-bit indicator is coded and transmitted over two slots thus leaving space for 32 levels. This coding is depicted in figure 5. All the coded bits will be mapped onto the HSDPA Uplink Dedicated Physical Control Channel (UL-DPCCH). In UMTS FDD (Frequency Division Duplex), the High Speed Downlink Shared Channel (HS-DSCH) related to uplink signaling can use High Speed Dedicated Physical Control Channel (HS-DPCCH) with a Spreading Factor=256 that is code multiplexed with the existing dedicated uplink physical channels.

The transmission cycle and timing for channel quality indicator is determined by UTRAN and signaled by control plane. Measurement feedback cycle *k* has a possible value of [1, 5, 10, 20, 40, 80] TTI. The larger the value of k the smaller is the signaling overhead in the uplink at the expense of decreased scheduling performance in the downlink. The set of values for measurement feedback offset / has yet to be determined. An illustration of feedback measurement transmission timing is given in figure 6.

Generally, the TFRC uplink signaling is intended to inform the BS on the current channel conditions of the UE and does not contain additional information on the current status of other applications at the UE such as a data buffer. Based on this information and QoS attributes, the BS's scheduling function will select a logical channel that is active in the current TTI.

According to an embodiment of the invention, the TFRC signaling in the uplink can be used to indicate to the BS that the UE buffer is full. Different method can be envisioned with and without explicit signaling.

For implicit signaling, one option could be that the UE sends a TFRC value that is lower than TFRC value under current channel conditions when the buffer is likely to overflow indicating that the BS should employ that TFRC value for scheduling that particular logical channel. In this case no additional uplink signaling is needed, but the UE behavior is not unambiguous to the BS.

The BS would not know if the TFRC was caused by bad channel conditions or by a UE incapable of processing all the data from a certain data flow. If the BS decides to schedule a logical channel without Bluetooth connection, a lower transmission format may be determined thus leading to waste of radio resources. To avoid this scenario, additional intelligent functions should be implemented in the BS. One possible solution would be to use the BS's own channel estimate (e.g. making own measurements of the channel or monitoring the power control commands of the UE) when transmission is to be switched from one logical channel of the same UE to another. Thus the BS could recognize that the low TFRC signal does not match to the current channel conditions and thus identify that the UE's buffer is full.

A method of explicit signaling on HARQ level requires the introduction of one or more new bit combinations for uplink TFRC signaling which is transmitted when UE buffer is full. In Table 3 an example with 5 bits (32 values) of such additional uplink signaling is shown.

**Table 3**

| TFRC | Data Rate Reduction | UL signaling value |
|---|---|---|
| TFRC-W | Wait | 28 |
| TFRC-R | ¾ | 29 |
| TFRC-R | ½ | 30 |
| TFCR-R | ¼ | 31 |

In another embodiment of the invention, as seen in Table 4, a resource information could be part of the new TFRC table with additional uplink signaling values for data rate control requesting a certain number of resources for the next transmission.

**Table 4**

| TFRC | Number of Codes | UL signaling value |
|---|---|---|
| TFRC-R | 0 | 28 |
| TFRC-R | 1 | 29 |
| TFRC-R | 5 | 30 |
| TFCR-R | 10 | 31 |

Depending on the access technology these resources could be number of codes, allocated number of time slots, number of frequencies etc. The different TFRC combinations defined can either be signalled from the RNC/BS to the UE or can be predefined (hard coded).

A brief description of procedures in the UE and the BS is given below.

### UE procedure:

If a data packet has been received and the UE buffer is full, a TFRC-W(Wait) signal is sent. This indicates to the BS that the application buffer for a previously scheduled data flow (logical channel) is full.

If a packet has been received and UE buffer is filling up, the UE shall request a reduction of the data rate by sending a TFRC-R (Reduce) signal from Table 3 to request a relative reduction of the previously received data rate.

Depending on the number of combinations that shall be reserved more information on the buffer state or on the allowed data rate could be sent. For example, if a packet has been received and UE buffer is filling up, the UE shall request a reduction of the data rate by sending a TFRC-R (Reduce) signal from Table 4 to request a absolute value for the radio resources in order to reduce the data rate. Depending on the number of combinations that shall be reserved, more information about the requested resources can be signalled.

### BS procedure:

Once TFRC-W signal is received, the BS should start a timer for that UE or for that logical channel of that UE. When the timer is expired, the BS is allowed to schedule data to that UE or to that logical channel of that UE again. The value of the timer cannot be determined according to a straight-forward analysis because TFRC-W does not contain any data on buffer occupancy etc. Therefore, it could be useful to use a "slow start" policy as described below for restarting transmission.

If the BS receives a requested TFRC-R (relative reduction) it shall reduce the data rate of the UE or the logical channel of that UE by the amount signalled. The data rate is reduced relative to the previously transmitted data rate of that UE or that logical channel of that UE.

If the BS receives a requested TFRC-R (absolute value) it shall allocate that amount of resources (e.g. number of codes) for the next transmission to that UE or that logical channel of that UE.

In a further embodiment of the invention, the method to control the data rate is carried out on the HARQ level, which requires the introduction of a new signal for uplink acknowledgement signaling (ACK-W) which is transmitted when UE buffer is full. A brief description of procedures in the UE and the BS is given below.

If a packet has been received at the UE correctly and its buffer is full, an ACK-W signal is sent. This indicates to the BS that the previously sent packet has been received correctly, but that the application buffer for the previously scheduled data flow (logical channel) is full.

Once ACK-W signal is received, the BS should start a timer for that logical channel. When the timer is expired, the BS is allowed to schedule data from that logical channel again.

A variation of the embodiment could be that the value of the timer is signaled from the RNC to the BS. The value of the timer cannot be determined according to a straight-forward analysis because the ACK-W signal does not contain any data on buffer occupancy etc. Therefore, it could be useful to use a "slow start" policy for starting transmission of that logical channel. That is, transmission should start with a lower data rate regardless of the current channel conditions.

It should be noted that data rate limitation can be carried out per logical channel. Once the ACK-W signal is received, it uniquely specifies the logical channel that should be blocked for a while. The current solution is that 1 bit acknowledgement indication is repetition coded into 10 bits and transmitted over one slot. Therefore, introducing the new ACK-W signal would decrease reliability of feedback.

Different mechanism can be used to extend the 1 bit ACK/NACK signal. One possible solution could be to use a different spreading code for the ACK/NACK signal. The usage of the codes would need to be signaled or be pre-defined. The BS would need to monitor/de-spread all possible spreading codes. Another realization of this scheme could use a different code word for the ACK/NACK signal instead of using a simple repetition. An example of using the code word the ACK/NACK signaling with the additional ACK-Wait signal is shown in Table 5.

**Table 5**

| | |
|---|---|
| ACK | 1 1 1 1 1 1 1 1 1 1 |
| NACK | 10101010 10 |
| ACK-Wait | 00000000 00 |

Particularly in the case where only a Wait or Stop signal is transmitted without additional signaling of the buffer occupancy it would be beneficial to start transmission with a lower data rate regardless of the current channel conditions. This will reduce the likelihood that packet have to be dropped at the UE while increasing the data rate slowly. The BS could also probe for a transmission to see if the UE answers with a ACK-W, TFRC-W or TFRC-R. Such a strategy could also be adapted based on the available radio resources.

Introduction of the new TFRC-W and TFRC-R signals described above is aimed to stop or reduce the transmission once it is identified that the UE's application buffer is full. Stopping all logical channel because of buffer overflow of only one logical channel would reduce the overall data throughput of a user unnecessarily. Furthermore it would lead to waste of radio resources, especially if the UE was in good channel conditions. Thus, when there are multiple data flows of a same UE, it is necessary to interpret the TFRC-W, TFRC-R or ACK-W so that only a single logical channel is stopped. This is achieved automatically by using ACK-W signal as stop transmission request, because this signal is uniquely tied to a certain TTI.

However, when TFRC-W or TFRC-R is used, the logical channel that should be stopped or reduced is uniquely specified only if the measurement feedback cycle *k*, as defined in the Figure 6, is set to 1. A unique timing must be specified to know to with TTI the TFRC request belongs to. Since *k* is set by UTRAN, the BS should be able to recognise whether there are multiple data flows and recommend the setting accordingly.

Another variant is that the UE in case of buffer overflow sends an TFRC-W out of the regular timing reporting cycle. That means even if there is no TFRC scheduled as defined by *k*, the UE could send the TFRC-W or TFRC-R to indicate to the BS its buffer overflow. That would require that the BS constantly monitors the uplink feedback channel of a UE regardless of the settings of the measurement reporting cycle.

## Claims

1. A method of controlling the data rate of transmitting data packets in a wireless communications system comprising a transmitter communicating with at least one receiver by means of radio communication signals, said method comprising the steps of:
allocating said data packets to at least one logical channel, which is mapped on at least one physical downlink communications channel for transmission to the receiver;
transmitting signaling information in an uplink feedback channel to the transmitter comprising a request to control data rate in at least one logical channel, said data rate control is based on the receiver's current capability to process the amount of received data packets comprised in the communication signals,
**characterized**
**by** transmitting data packets employing an automatic repeat request or a hybrid automatic repeat request protocol and
in that the signalling information is sent as a channel state indication having either a predefined bit combination or a value, which indicates a virtual channel condition information.

2. The method according to claim 1, **characterized in that** the capability to process the amount received data packets depends on the buffer occupancy state of an application at the receiver.

3. The method according to claim 1, **characterized in that** the capability to process the amount of received data packets depends on the receiver's capability to transmit the received data packets to another communication device.

4. The method according to one of claims 1-3, **characterized in that** the downlink communication channel is suitable for high speed downlink packet access (HSDPA).

5. The method according to claim 3, **characterized in that** the logical channel is a high rate channel having a peak bit rate of preferably in the order of 12 Mbps to 10 Mbps while the transmission to another communication device is performed in a low rate channel based on short distance radio technology having an average bit rate of preferably in a range of 500 to 1,000 kbps.

6. The method according to one of claims 1-5, **characterized in that** the signaling information in the uplink feedback channel includes an implicit or explicit identification of the logical channel for which the data rate is to be controlled.

7. The method according to one of claims 1-6, **characterized in that** the data rate control reduces the data rate or stops transmission of data to the receiver.

8. The method according to one of claims 1-7, **characterized in that** the data rate control is performed for at least one logical channel while for at least one other logical channel the data rate is maintained.

9. The method according to claim 6, **characterized in that** the identification of the logical channel is enabled by sending the signaling information by a uniquely specified timing relative to the downlink transmission.

10. The method according to one of claims 1-9, **characterized in that** the signaling information in the uplink feedback channel is combined with other signaling information of the communication system.

11. The method according to claim 10, **characterized in that** the signaling information is combined with a recommended transmission format resource combination (TFRC) or a Channel State Indicator (CSI) such as Carrier-to-Interface (C/I), Signal-to-Noise (SNR) or a transmission power command.

12. The method according to claim 1, **characterized in that** the channel state indication has a value which indicates a worse channel condition than the current channel condition.

13. The method according to claim 11, **characterized in that** the predefined combination in the signaling information is sent in the TFRC, C/I- or SNR- value list.

14. The method according to one of claims 1-13, **characterized in that** the signaling information requests allocation of fewer radio resources for the logical channel in the next transmission of data packets.

15. The method according to at least claim 10, **characterized in that** the other signaling information combined with the acknowledgement (ACK)/not acknowledgement (NACK) of correctly received data packets.

16. The method according to claim 15, **characterized in that** an acknowledgement-wait (ACK-W) signal is sent when the packet is received correctly and the transmission shall be stopped.

17. The method according to one of claims 1-16, **characterized in that** the data rate control is performed for a predetermined period of time which is signaled from the radio network controller of the communication system.

18. The method according to one of claims 1-17, **characterized in that** upon performing data rate control in response to receipt of a request to reduce the data rate or to stop the transmission, it is resumed with an incrementally increased data rate.

19. The method according to one of claims 1-18, **characterized in that** upon performing the data rate control in response to receipt of a request to reduce the data rate or stop transmission, it is resumed with a small amount of data as a probe to obtain the receiver's signaling information in the uplink feedback channel.

20. A transmitter for controlling the data rate of transmitting data packets for a wireless communications system comprising the transmitter communicating with at least one receiver by means of radio communication signals, said transmitter comprising
means for allocating said data packets to at least one logical channel, which is mapped on at least one physical downlink communications channel for transmission to the receiver;
means for receiving signalling information in an uplink feedback channel comprising a request to control data rate in at least one logical channel, wherein said signalling information is sent as a channel state indication having either a predefined bit combination or a value, which indicates a virtual channel condition information, and said data rate control is based on the receiver's current capability to process the amount of received data packets comprised in the communication signals; and
means for transmitting data packets employing an automatic repeat request or a hybrid automatic repeat request protocol.

21. The transmitter according to 20 further comprising a scheduler for scheduling at least one of the logical channels according to its priority, the available radio resources or the current downlink channel conditions.

22. The transmitter according to claim 20 or 21, further comprising means for recognizing whether one or a plurality of logical channels per receiver exist.

23. The transmitter according to one of claims 20 or 22, further comprising a timer for determining the period over which the data rate control is performed.

24. The transmitter according to one of claims 20 or 23, further comprising means for estimating the channel conditions and companng the same with respective channel condition information indicated in the signalling information in the uplink feedback channel.

25. The transmitter according to one of claims 20 to 24, being embodied as a based station of said communication system.

26. A receiver for a wireless communications system comprising the transmitter communicating with the receiver by transmitting data packets employing an automatic repeat request or a hybrid automatic repeat request protocol, said receiver comprising
means for transmitting signalling information in an uplink feedback channel to the transmitter comprising a request to control the transmitter data rate in at least one logical channel, wherein said signalling information is sent as a channel state indication having either a predefined bit combination or a value, which indicates a virtual channel condition information, and
said data rate control is based on the receiver's current capability to process the amount of received data packets comprised in the communication signals.

## Patentansprüche

1. Verfahren zum Steuern der Datenrate beim Senden von Datenpaketen in einem Drahtlos-Kommunikationssystem, das einen Sender umfasst, der mit wenigstens einem Empfänger durch Funk-Kommunikationssignale kommuniziert, wobei das Verfahren die folgenden Schritte umfasst:
Zuordnen der Datenpakete zu wenigstens einem logischen Kanal, der auf wenigstens einem physikalischen Downlink-Kommunikationskanal zum Senden zu dem Empfänger abgebildet wird;
Senden von Signalisierungsinformationen in einem Uplink-Rückkanal zu dem Sender, die eine Anforderung umfassen, die Datenrate in wenigstens einem logischen Kanal zu steuern, wobei die Datenratensteuerung auf der aktuellen Fähigkeit des Empfängers basiert, die Menge an empfangenen Datenpaketen zu verarbeiten, die in den Kommunikationssignalen enthalten sind,
**gekennzeichnet**
**durch** Senden von Datenpaketen unter Verwendung eines ARQ- oder eines hybriden, automatischen ARQ-Protokolls und
**dadurch**, dass die Signalisierungsinformationen als eine Kanal-Statusanzeige gesendet werden, die entweder eine vordefinierte Bit-Kombination oder einen Wert hat, der eine Zustandsinformation eines virtuellen Kanals anzeigt.

2. Verfahren nach Anspruch 1, **dadurch gekennzeichnet, dass** die Fähigkeit zur Verarbeitung der Menge empfangener Datenpakete von dem Puffer-Belegungszustand einer Anwendung an dem Empfänger abhängt.

3. Verfahren nach Anspruch 1, **dadurch gekennzeichnet, dass** die Fähigkeit zur Verarbeitung der Menge empfangener Datenpakete von der Fähigkeit des Empfängers zum Senden der empfangenen Datenpakete zu einer anderen Kommunikationsvorrichtung abhängt.

4. Verfahren nach einem der Ansprüche 1 - 3, **dadurch gekennzeichnet, dass** das Downlink-Kommunikationssignal für High-Speed-Downlink-Packet-Access (HSDPA)-Betneb geeignet ist.

5. Verfahren nach Anspruch 3, **dadurch gekennzeichnet, dass** der logische Kanal ein Kanal mit hoher Rate ist, der eine Spitzen-Bitrate, vorzugsweise in der Größenordnung von 1,2 Mbps bis 10 Mbps hat, während das Senden zu einer anderen Kommunikationsvorrichtung auf einem Kanal mit niedriger Rate durchgeführt wird, der auf einer Kurzstrecken-Funktechnologie basiert, die eine durchschnittliche Bitrate, vorzugsweise im Bereich von 500 bis 1000 kbps, hat.

6. Verfahren nach einem der Ansprüche 1 - 5, **dadurch gekennzeichnet, dass** die Signalisierungsinformationen in dem Uplink-Rückkanal eine implizite oder explizite Identifizierung des logischen Kanals enthalten, für den die Datenrate zu steuern ist.

7. Verfahren nach einem der Ansprüche 1 - 6, **dadurch gekennzeichnet, dass** die Datenratensteuerung die Datenrate reduziert oder das Senden von Daten zu dem Empfänger unterbricht.

8. Verfahren nach einem der Ansprüche 1 - 7, **dadurch gekennzeichnet, dass** die Datenratensteuerung für wenigstens einen logischen Kanal durchgeführt wird, während für wenigstens einen weiteren logischen Kanal die Datenrate beibehalten wird.

9. Verfahren nach Anspruch 6, **dadurch gekennzeichnet, dass** die Identifizierung des logischen Kanals ermöglicht wird, indem die Signalisierungsinformationen mittels eines eindeutig vorgegebenen Timings relativ zu dem Downlink-Senden gesendet werden.

10. Verfahren nach einem der Ansprüche 1 - 9, **dadurch gekennzeichnet, dass** die Signalisierungsinformationen in dem Uplink-Rückkanal mit anderen Signalisierungsinformationen des Kommunikationssystems kombiniert werden.

11. Verfahren nach Anspruch 10, **dadurch gekennzeichnet, dass** die Signalisierungsinformationen mit einer empfohlenen Transmission Format Ressource Combination (TFRC) oder einem Channel State Indicator (CSI), wie beispielsweise Trägersignal-zu-Interferenzsignal-Verhältnis (C/I), Signal-Rausch-Verhältnis (SNR) oder einem Sendeleistungs-Befehl kombiniert werden.

12. Verfahren nach Anspruch 1, **dadurch gekennzeichnet, dass** die Kanalzustandsanzeige einen Wert hat, der eine schlechtere Kanalbedingung als die aktuelle Kanalbedingung anzeigt.

13. Verfahren nach Anspruch 1, **dadurch gekennzeichnet, dass** die vordefinierte Kombination in den Signalisierungsinformationen in der TFRC, C/I- oder SNR-Werteliste gesendet wird.

14. Verfahren nach einem der Ansprüche 1 - 13, **dadurch gekennzeichnet, dass** die Signalisierungsinformationen Zuordnen von weniger Funkressourcen für den logischen Kanal beim nächsten Senden von Datenpaketen anfordert.

15. Verfahren wenigstens nach Anspruch 10, **dadurch gekennzeichnet, dass** die anderen Signalisierungsinformationen mit der positiven Bestätigung (ACK)/negativen Bestätigung (NACK) richtig empfangener Datenpakete kombiniert werden.

16. Verfahren nach Anspruch 15, **dadurch gekennzeichnet, dass** ein ACK-Warte (ACK-W)-Signal gesendet wird, wenn das Paket richtig empfangen wurde und das Senden unterbrochen werden soll.

17. Verfahren nach einem der Ansprüche 1 - 16, **dadurch gekennzeichnet, dass** die Datenratensteuerung über einen vorgegebenen Zeitraum durchgeführt wird, der von der Funknetzsteuerung des Kommunikationssystems signalisiert wird.

18. Verfahren nach einem der Ansprüche 1 - 17, **dadurch gekennzeichnet, dass** beim Durchführen von Datenratensteuerung in Reaktion auf den Empfang einer Anforderung zum Verringern der Datenrate oder zum Unterbrechen des Sendens dieses mit einer schrittweisen erhöhten Datenrate wieder aufgenommen wird.

19. Verfahren nach einem der Ansprüche 1 - 18, **dadurch gekennzeichnet, dass** beim Durchführen der Datenratensteuerung in Reaktion auf Empfang einer Anforderung zum Verringern der Datenrate oder zum Unterbrechen des Sendens dieses mit einer geringeren Datenmenge als ein Test wieder aufgenommen wird, um die Signalisierungsinformationen des Empfängers in dem Uplink-Rückkanal zu erhalten.

20. Sender zum Steuern der Datenrate beim Senden von Datenpaketen für ein Drahtlos-Kommunikationssystem, das den Sender umfasst, der mit wenigstens einem Empfänger durch Funk-Kommunikationssignale kommuniziert, wobei der Sender umfasst:
eine Einnchtung, die die Datenpakete zu wenigstens einem logischen Kanal zuordnet, der auf wenigstens einem physikalischen Downlink-Kommunikationskanal zum Senden zu dem Empfänger abgebildet wird;
eine Einrichtung, die Signalisierungsinformationen in einem Uplink-Rückkanal empfängt, die eine Anforderung umfassen, die Datenrate in wenigstens einem logischen Kanal zu steuern, wobei die Signalisierungsinformationen als eine Kanalzustandsanzeige gesendet werden, die entweder eine vordefinierte Bitkombination oder einen Wert aufweist, der Zustandsinformationen eines virtuellen Kanals anzeigt, und die Datenratensteuerung auf der aktuellen Fähigkeit des Empfängers basiert, die Menge an empfangenen Datenpaketen zu verarbeiten, die in den Kommunikationssignalen enthalten sind; und
eine Einrichtung, die Datenpakete unter Verwendung eines ARQ- oder eines hybriden ARQ-Protokolls sendet.

21. Sender nach Anspruch 20, der des Weiteren einen Scheduler umfasst, der wenigstens einen der logischen Kanäle entsprechend seiner Priorität, der verfügbaren Funkressourcen oder den aktuellen Downlink-Kanalbedingungen einplant.

22. Sender nach Anspruch 20 oder 21, der des Weiteren eine Einrichtung umfasst, die erkennt, ob ein logischer Kanal oder eine Vielzahl logischer Kanäle pro Empfänger vorhanden ist.

23. Sender nach einem der Ansprüche 20 oder 22, der des Weiteren eine Zeitsteuerung umfasst, die den Zeitraum bestimmt, über den die Datenratensteuerung durchgeführt wird.

24. Sender nach einem der Ansprüche 20 oder 23, der des Weiteren eine Einrichtung umfasst, die die Kanalbedingungen schätzt und diese mit entsprechenden Kanalbedingungsinformationen vergleicht, die in den Signalisierungsinformationen des Uplink-Rückkanals angezeigt werden.

25. Sender nach einem der Ansprüche 20 bis 24, der als eine Basisstation des Kommunikationssystem ausgeführt ist.

26. Empfänger für ein Drahtlos-Kommunikationssystem, das den Sender umfasst, der mit dem Empfänger durch Senden von Datenpaketen unter Verwendung eines ARQ- oder eines hybriden ARQ-Protokolls kommuniziert, wobei der Empfänger umfasst:
eine Einrichtung, die Signalisierungsinformationen in einem Uplink-Rückkanal zu dem Sender sendet, die eine Anforderung umfassen, die Sender-Datenrate in wenigstens einem logischen Kanal zu steuern, wobei die Signalisierungsinformationen als eine Kanal-Statusanzeige gesendet werden, die entweder eine vordefinierte Bit-Kombination oder einen Wert hat, der eine Zustandsinformation eines virtuellen Kanals anzeigt, und
die Datenratensteuerung auf der aktuellen Fähigkeit des Empfängers basiert, die Menge an empfangenen Datenpaketen zu verarbeiten, die in den Kommunikationssignalen enthalten sind.

## Revendications

1. Procédé de commande du débit binaire de transmission de paquets de données dans un système de communication sans fil comprenant un émetteur communiquant avec au moins un récepteur au moyen de signaux de radiocommunication, ledit procédé comprenant les étapes consistant à :
attribuer lesdits paquets de données à au moins un canal logique, lequel est mis en correspondance sur au moins un canal de communication de liaison descendante physique pour transmission au récepteur ;
émettre des informations de signalisation dans un canal de retour de liaison montante vers l'émetteur comprenant une demande pour commander le débit binaire dans au moins un canal logique, ladite commande du débit binaire est basée sur la capacité actuelle du récepteur à traiter la quantité des paquets de données reçus compris dans les signaux de communication,
**caractérisé par** les étapes consistant à
transmettre les paquets de données employant un protocole de demande de répétition automatique ou un protocole de demande de répétition automatique hybride et
en ce que les informations de signalisation sont envoyées comme indication d'état de canal ayant soit une combinaison binaire prédéfinie, soit une valeur, qui indique des informations de condition de canal virtuelles.

2. Procédé selon la revendication 1, **caractérisé en ce que** la capacité à traiter la quantité de paquets de données reçus est fonction de l'état d'occupation de la mémoire tampon d'une application au niveau du récepteur.

3. Procédé selon la revendication 1, **caractérisé en ce que** la capacité à traiter la quantité de paquets de données reçus est fonction de la capacité du récepteur à transmettre les paquets de données reçus à un autre dispositif de communication.

4. Procédé selon l'une quelconque des revendications 1 à 3, **caractérisé en ce que** le canal de communication de liaison descendante est approprié pour l'accès à des paquets de liaison descendante à vitesse élevée (HSDPA).

5. Procédé selon la revendication 3, **caractérisé en ce que** le canal logique est un canal à débit binaire élevé ayant un débit binaire crête de préférence de l'ordre de 1,2 Mbps à 10 Mbps tandis que la transmission vers un autre dispositif de communication est effectuée sur un canal à faible débit binaire sur la base d'une technologie radio à distance courte ayant un débit binaire moyen de préférence dans la plage de 500 à 1 000 kbps.

6. Procédé selon l'une quelconque des revendications 1 à 5, **caractérisé en ce que** les informations de signalisation dans le canal de retour de liaison montante incluent une identification implicite ou explicite du canal logique pour lequel le débit binaire doit être commandé.

7. Procédé selon l'une quelconque des revendications 1 à 6, **caractérisé en ce que** la commande du débit binaire réduit le débit binaire ou arrête la transmission des données vers le récepteur.

8. Procédé selon l'une quelconque des revendications 1 à 7, **caractérisé en ce que** la commande du débit binaire est effectuée pour au moins un canal logique tandis que pour au moins un autre canal logique le débit binaire est maintenu.

9. Procédé selon la revendication 6, **caractérisé en ce que** l'identification du canal logique est activée en envoyant les informations de signalisation par un cadencement uniquement spécifié par rapport à la transmission de liaison descendante.

10. Procédé selon l'une quelconque des revendications 1 à 9, **caractérisé en ce que** les informations de signalisation dans le canal de retour de liaison montante sont combinées avec d'autres informations de signalisation du système de communication.

11. Procédé selon la revendication 10, **caractérisé en ce que** les informations de signalisation sont combinées avec une combinaison de ressources de format de transmission recommandée (TFRC) ou un indicateur d'état de canal (CSI) tel que rapport porteuse/interface (C/I), rapport signal/bruit (SNR) ou un ordre de puissance d'émission.

12. Procédé selon la revendication 1, **caractérisé en ce que** l'indication d'état de canal présente une valeur qui indique une condition de canal pire que la condition actuelle du canal.

13. Procédé selon la revendication 11, **caractérisé en ce que** la combinaison prédéfinie dans les informations de signalisation est envoyée dans la liste de valeur TFRC, C/I ou SNR.

14. Procédé selon l'une quelconque des revendications 1 à 13, **caractérisé en ce que** les informations de signalisation demandent l'attribution de moins de ressources radio pour le canal logique dans la transmission suivante des paquets de données.

15. Procédé selon au moins la revendication 10, **caractérisé en ce que** les autres informations de signalisation combinées avec l'acquittement (ACK)/non-acquittement (NACK) des paquets de données reçus de manière correcte.

16. Procédé selon la revendication 15, **caractérisé en ce qu'**un signal d'attente d'acquittement (ACK-W) est envoyé lorsque le paquet est reçu de manière correcte et que la transmission devrait être arrêtée.

17. Procédé selon l'une quelconque des revendications 1 à 16, **caractérisé en ce que** la commande du débit binaire est effectuée pendant une période de temps prédéterminée qui est signalée depuis le contrôleur du réseau radio du système de communication.

18. Procédé selon l'une quelconque des revendications 1 à 17, **caractérisé en ce que** lors de l'exécution de la commande du débit binaire en réponse à la réception de demande pour réduire le débit binaire ou pour arrêter la transmission, celle-ci est reprise avec un débit binaire accru de manière incrémentielle.

19. Procédé selon l'une quelconque des revendications 1 à 18, **caractérisé en ce que** lors de l'exécution de la commande du débit binaire en réponse à la réception d'une demande pour réduire le débit binaire ou arrêter la transmission, celle-ci est reprise avec une faible quantité de données comme test pour obtenir les informations de signalisation du récepteur dans le canal de retour de liaison montante.

20. Emetteur pour commander le débit binaire de la transmission de paquets de données pour un système de communication sans fil comprenant l'émetteur communiquant avec au moins un récepteur au moyen de signaux de radiocommunication, ledit émetteur comprenant
un moyen pour attribuer lesdits paquets de données à au moins un canal logique, lequel est mis en correspondance sur au moins un canal de communication de liaison descendante physique pour transmission au récepteur ;
un moyen pour recevoir les informations de signalisation dans un canal de retour de liaison montante comprenant une demande pour commander le débit binaire dans au moins un canal logique, dans lequel lesdites informations de signalisation sont envoyées comme indication d'état de canal ayant soit une combinaison binaire prédéfinie, soit une valeur, qui indique des informations de condition de canal virtuelles, et ladite commande du débit binaire est basée sur la capacité actuelle du récepteur à traiter la quantité des paquets de données reçus compris dans les signaux de communication ; et
un moyen pour transmettre les paquets de données employant un protocole de demande de répétition automatique ou un protocole de demande de répétition automatique hybride.

21. Emetteur selon la revendication 20, comprenant, de plus, un planificateur pour planifier au moins un des canaux logiques en conformité avec sa priorité, avec les ressources radio exploitables ou les conditions de canal actuelles de liaison descendante.

22. Emetteur selon la revendication 20 ou 21, comprenant, de plus, un moyen pour reconnaître si un ou une pluralité de canaux logiques par récepteur existent.

23. Emetteur selon l'une quelconque des revendications 20 ou 22, comprenant, de plus, un temporisateur pour déterminer la période sur laquelle la commande du débit binaire est effectuée.

24. Emetteur selon l'une quelconque des revendications 20 ou 23, comprenant, de plus, un moyen pour estimer les conditions du canal et pour les comparer aux informations de condition de canal respectives indiquées dans les informations de signalisation dans le canal de retour de liaison montante.

25. Emetteur selon l'une quelconque des revendications 20 à 24, étant réalisé comme station de base dudit système de communication.

26. Récepteur pour un système de communication sans fil comprenant l'émetteur communiquant avec le récepteur en transmettant des paquets de données employant un protocole de demande de répétition automatique ou un protocole de demande de répétition automatique hybride, ledit récepteur comprenant :
un moyen pour transmettre les informations de signalisation dans un canal de retour de liaison montante à l'émetteur comprenant une demande pour commander le débit binaire de l'émetteur dans au moins un canal logique, dans lequel lesdites informations de signalisation sont envoyées comme indication d'état de canal ayant soit une combinaison binaire prédéfinie, soit une valeur, qui indique des informations de condition de canal virtuelles, et
ladite commande du débit binaire est basée sur la capacité actuelle du récepteur à traiter la quantité des paquets de données reçus compris dans les signaux de communication.
